# EUROPEAN PATENT SPECIFICATION

(11) **EP 3 357 842 B1**
(45) Date of publication and mention of the grant of the patent: **23.03.2022**
(21) Application number: 17154631.0
(22) Date of filing: 03.02.2017
(51) Int. Cl.: B65G 54/02, G01N 35/04, G01N 35/00, G06T 7/00

(54) **LABORATORY AUTOMATION SYSTEM**
LABORAUTOMATISIERUNGSSYSTEM
SYSTÈME D'AUTOMATISATION DE LABORATOIRE

(43) Date of publication of application: 08.08.2018
(73) Proprietor: Roche Diagnostics GmbH, 68305 Mannheim (DE); F. Hoffmann-La Roche AG, 4070 Basel (CH)
(72) Inventor: BIRRER, Armin, 6044 Udligenswil (CH); DRECHLER, Andreas, 6340 Baar (CH); HARBERS, Rik, 6330 Cham (CH)
(74) Representative: Patentanwälte Ruff, Wilhelm, Beier, Dauster & Partner mbB

(56) References cited:
- EP-A1- 2 574 933
- EP-A1- 2 995 580
- WO-A1-2015/191702
- US-A1- 2005 163 354
- US-A1- 2007 134 131
- US-A1- 2011 200 239
- US-A1- 2016 025 756

## Description

The invention relates to a laboratory automation system.

EP 1 466 160 A1 discloses a laboratory automation system comprising an image processing device being adapted to determine geometrical properties of a sample container depending on image data related to the sample container. Such image processing devices typically require a geometry and color calibration to ensure proper functioning.

A typical laboratory sample distribution system being used in a laboratory automation system is disclosed in document WO 2013/064656 A1. The system comprises a number of sample container carriers being adapted to carry one or more sample containers, a transport plane being adapted to support the sample container carriers, a number of electro-magnetic actuators being adapted to move the sample container carriers on top of the transport plane by applying a magnetic force to the sample container carriers, and a control device being adapted to control the movement of the sample container carriers on top of the transport plane by driving the electro-magnetic actuators.

EP 2 574 933 A1 discloses a method for handling a sample tube containing a biological sample, a tube label being attached to the sample tube, the tube label carrying tube data, the tube data comprising at least geometric tube data being descriptive of at least one geometric property of the sample tube, the method comprising: reading at least the geometric tube data from the tube label by a reader device, transmitting at least the geometric tube data from the reader device to a processing device, controlling the processing device for handling the sample tube in accordance with the at least one geometric property described by the read geometric data.

US 2005/0163354 A1 discloses a method and a device for analyzing body fluids. A picture recording device is placed in a flare-free room provided with a lightning equipment and is connected to an electronic picture evaluating device. The picture recording device is focused on a container which is in an analysis position and contains the body fluid in order to take at least one picture of the body fluid. Said picture is analyzed by picture-evaluating software, whereby the quality and quantity of the body fluid is detected.

US 2016/0025756 A1 discloses an identification whether a cap is placed on a sample vessel carried by a carrier, wherein an identification is performed of at least one of a color and the type of the cap.

US 2007/0134131 A1 discloses a pathology distribution system comprising a sample handling station for receiving containers and identifying the container types and samples therein.

US 2011/0200239 A1 discloses an apparatus for and a method of analyzing hematologic samples using image processing, wherein calibration or measurement marks may be placed on tubes or holders to facilitate geometric and/or optical calibration by a camera.

EP 2 995 580 A1 discloses a laboratory sample distribution system and a laboratory automation system.

### Object and solution

It is an object of the invention to provide for a laboratory automation system having a reliable and cost effective geometry and/or color calibration.

The invention solves this object by providing a laboratory automation system according to claim 1. Other embodiments are defined in dependent claims 2-7.

The laboratory automation system is adapted to process sample containers containing laboratory samples and/or to process the samples. Insofar reference is also made to the prior art.

The sample container is typically designed as a sample tube made of glass or transparent plastic and typically has an opening at an upper end. The sample container may be used to contain, store and transport the laboratory sample such as a blood sample, (blood) serum or plasma sample, a urine sample, separation gel, cruor (blood cells), a chemical sample or a reagent. The sample container may be rotationally symmetric.

The laboratory automation system comprises at least one digital grey scale or color camera. The camera is adapted to take a digital image of the sample container and the sample together with a calibration element. The calibration element may be assigned to the sample container. The calibration element may have known geometrical properties. The same digital image comprises digital image data related to the sample container and/or to the sample and digital image data related to the calibration element.

The laboratory automation system further comprises an image processing device, e.g. in form of a microprocessor or a Personal Computer. The image processing device is adapted to determine geometrical properties of the sample container and/or geometrical properties of the sample depending on the image data related to the sample container and/or to the sample and the image data related to the calibration element.

The geometrical properties of the sample container may e.g. be a height or length of the sample container, a diameter of the sample container, a filling level of the sample in the sample container, etc.

The image processing device determines the geometrical properties of the sample container and/or geometrical properties of the sample depending on the image data related to the sample container and to the sample and the image data related to the calibration element based on the rule of three. In a first step, the image processing device determines the pixel data related to sample container by pattern recognition. The image processing device determines the pixel data related to the sample by pattern recognition. Accordingly, the pixel data related to the calibration element are determined by pattern recognition. If the sample container and the calibration element are aligned, the image processing device "counts" the pixels along a coordinate for the sample container and counts the pixels for the calibration element along the same coordinate. The geometrical property in this coordinate are then determined by the rule of three. If, e.g., the sample container has a height (z coordinate) of 100 pixels, the calibration element has a height of 10 pixels and the calibration element has a known physical height of 1 cm, the physical height of the sample container may be calculated to 10 cm.

According to an embodiment, the laboratory automation system comprises a number (e.g. 1 to 10.000) of sample container carriers being adapted to carry and/or hold and/or store one or more sample containers. The camera is adapted to take the digital image of the sample container and the sample together with the sample container carrier.

The sample container is closed by means of a cap having known geometrical properties. The calibration element is formed by the cap. The image processing device is adapted to determine the geometrical properties of the cap. For that purpose, the image processing device may determine a given type of the cap by pattern recognition. After detecting the type, the image processing device may access a database using the determined type, wherein the database stores geometrical properties for types of caps used in the laboratory automation system. Then, the image processing device determines the geometrical properties of the sample container and/or the geometrical properties of the sample depending on the image data related to the sample container and/or the sample and the geometrical properties of the cap, as e.g. discussed above using the rule of three.

According to an embodiment, the digital camera is a digital color camera, wherein the calibration element has known or defined color properties. The image processing device is adapted to calibrate the digital color camera depending on the defined color properties of the calibration element.

According to an embodiment, the laboratory automation system comprises a transport plane or transport surface being adapted to support or carry the sample container carriers. The transport plane or transport surface may be planar and the sample container carriers are placed on top of the transport plane or transport surface. The laboratory automation system further comprises drive means being adapted to move the sample container carriers on top of the transport plane. The laboratory automation system further comprises a control device being adapted to control the movement of the sample container carriers on top of the transport plane by driving the drive means such that the sample container carriers move along corresponding transport paths. The control device may e.g. embodied in form of a Personal Computer or a microprocessor based control device.

### Brief description of the drawings

The invention will be described in detail with respect to the drawings schematically depicting embodiments of the invention. In detail:
Fig. 1 schematically shows a laboratory automation system,
Fig. 2 schematically shows a sample container carrier used in the laboratory automation system of figure 1 comprising a calibration element, fig. 2 is not part of the present invention as claimed.
Fig. 3 schematically shows a sample container carrier used in the laboratory automation system of figure 1 carrying a sample container closed by a cap serving as a calibration element, and
Fig. 4 schematically shows a sample container carrier used in the laboratory automation system of figure 1 serving as a calibration element. Fig. 4 is not part of the present invention as claimed.

### Detailed description of the embodiments

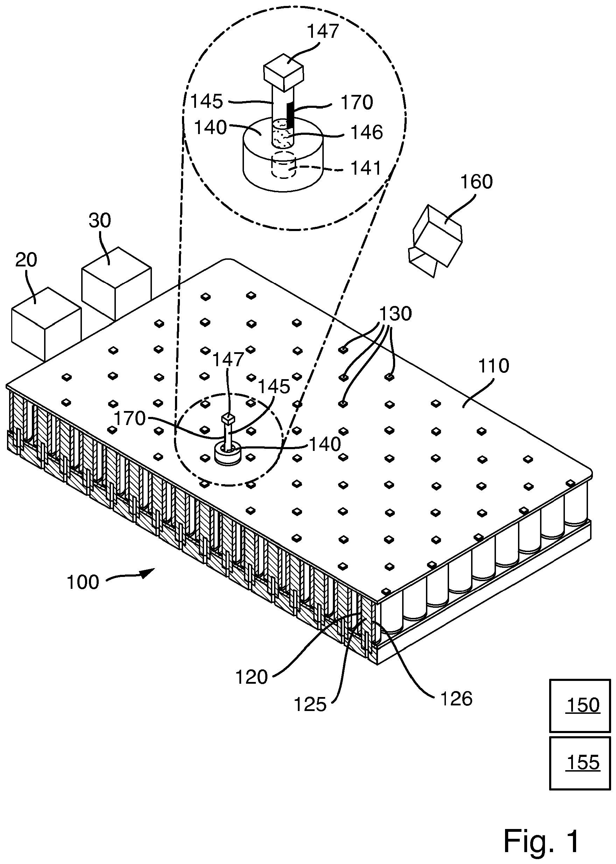

Fig. 1 shows a laboratory automation system 100. The laboratory automation system 100 comprises a first laboratory station 20 and a second laboratory station 30. The first laboratory station 20 is a pipetting station.

The laboratory automation system 100 comprises a transport plane 110. Below the transport plane 110, a plurality of electro-magnetic actuators 120 are arranged in rows and columns forming a grid. Each electro-magnetic actuator 120 comprises a respective ferromagnetic core 125 being encircled by a coil 126.

A number of position sensors 130, being embodied as Hall-sensors, are distributed over the transport plane 110.

The laboratory automation system 100 further comprises a plurality of sample container carriers 140. A sample container carrier 140 can carry a respective sample container 145, being embodied as laboratory tube. It is to be noted that only one laboratory sample container carrier 140 carrying a respective sample container 145 is shown in fig. 1 for exemplary purposes. A typical laboratory automation system 100 comprises a plurality of such sample container carriers 140.

Each sample container carrier 140 comprises a magnetically active device 141 in the form of a permanent magnet. Thus, magnetic fields generated by the electro-magnetic actuators 120 can drive a sample container carrier 140 over the transport plane 110. Furthermore, the magnetic field generated by the permanent magnet 141 of a sample container carrier 140 can be detected by the position sensors 130, so that a feedback regarding the position of a sample container carrier 140 can be obtained.

Both the electro-magnetic actuators 120 and the position sensors 130 are electrically connected to a control device 150. The control device 150 can drive the electro-magnetic actuators 120 such that the sample container carriers 140 move along corresponding transport paths. It can also determine the position of each sample container carrier 140.

The laboratory stations 20, 30 are arranged adjacent to the transport plane 110. It is noted that these two laboratory stations 20, 30 are only shown for exemplary purposes in fig. 1, and that a typical laboratory automation system 100 comprises more than two laboratory stations 20, 30.

The laboratory automation system 100 further comprises a digital color camera 160 and an image processing device 155 functionally coupled to the digital color camera 160.

A calibration element 170 in form of a sticker is attached to the sample container 145.

Before processing the sample comprised in the sample container 145, the digital camera 160 takes an image of the sample container 145 together with the calibration element 170. The resulting digital image comprises image data related to the sample container 145 and to the sample 146 and image data related to the calibration element 170.

The image processing device then determines geometrical properties of the sample container 145 and/or geometrical properties of the sample 146 depending on the image data related to the sample container 145 and to the sample 146 and the image data related to the calibration element 170. The image processing device may e.g. determine a filling level of the sample inside the sample container 145.

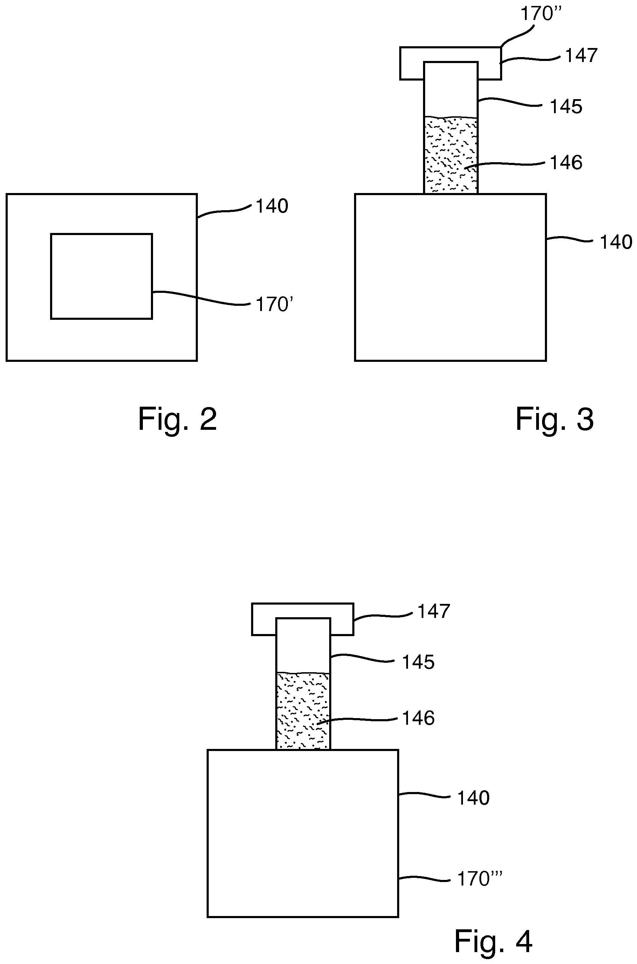

Fig. 2 schematically shows a sample container carrier 140 optically marked by means of a calibration element 170'. The calibration element 170' is a camera detectable sign having defined geometrical properties, here a rectangle having known side lengths. The calibration element 170' has the same function as the calibration element 170 of Fig. 1 and is used to calibrate the camera 160.

Fig. 3 schematically shows a sample container carrier 140 not being marked with the calibration element 170' of Fig. 2. The sample container carrier 140 carries a sample container 145 closed by a cap 147 serving as a calibration element 170". The calibration element 170" has the same function as the calibration elements 170 and 170'.

Fig. 4 schematically shows a sample container carrier 140 carrying a sample container 145 closed by a cap 147, wherein the sample container carrier 140 forms a calibration element 170‴. The calibration element 170'" has the same function as the calibration elements 170, 170' and 170".

The calibration elements 170, 170', 170", 170'" may have defined color properties, wherein the image processing device 155 is adapted to calibrate the digital color camera 160 depending on the defined color properties of the calibration elements 170, 170′, 170ʺ, 170‴.

The pipetting station 20 performs the pipetting process in response to the determined filling level of the sample containers 145.

According to the invention, no prior calibration of the camera 160 and of the image processing device 155 is performed. The image captured of the sample container together with the calibration element 170, 170′, 170ʺ, 170‴ is used both for calibration and result-generating processing. No reference tubes, reference data or previously stored data is required.

## Claims

1. Laboratory automation system (100) for processing sample containers (145) containing laboratory samples (146) and/or for processing the samples (146), comprising:
- a digital camera (160) being adapted to take an image of the sample container (145) together with a calibration element (170, 170', 170", 170"'), wherein the image comprises image data related to the sample container (145) and image data related to the calibration element (170, 170′, 170ʺ, 170‴), and
- an image processing device (155) being adapted to determine geometrical properties of the sample container (145) depending on the image data related to the sample container (145) and the image data related to the calibration element (170, 170', 170", 170'"),
- wherein the sample container (145) is closed by means of a cap (147),
**characterized in that**
- the calibration element (170") is formed by the cap (147),
- wherein the image processing device (155) is adapted to
- determine geometrical properties of the cap (147),
- determine pixel data related to the sample container (145) and pixel data related to the cap (147) by pattern recognition,
- count the pixels along a coordinate for the sample container (145) and for the cap (147), and
- determine the geometrical properties of the sample container (145) in this coordinate based on the rule of three, using the counted pixels in this coordinate.

2. Laboratory automation system (100) according to claim 1, **characterized in that**
- the laboratory automation system (100) comprises sample container carriers (140) being adapted to carry the sample containers (145).

3. Laboratory automation system (100) according to one of the preceding claims, **characterized in that**
- the digital camera (160) is a digital color camera,
- wherein the calibration element (170, 170', 170", 170"') has defined color properties, wherein the image processing device (155) is adapted to calibrate the digital color camera depending on the defined color properties of the calibration element (170, 170′, 170ʺ, 170‴).

4. Laboratory automation system (100) according to claim 2 or 3, **characterized in that**
- the laboratory automation system (100) comprises:
- a transport plane (110),
- drive means (120) being adapted to move the sample container carriers (140) on top of the transport plane (110), and
- a control device (150) being adapted to control the movement of the sample container carriers (140) on top of the transport plane (110) by driving the drive means (120) such that the sample container carriers (140) move along corresponding transport paths.

5. Laboratory automation system (100) according to claim 4, **characterized in that**
- the drive means (120) are electro-magnetic actuators being located below the transport plane (110) and being controllable by the control device (150), and
- the sample container carriers (140) respectively comprise a magnetically active device (141) for interaction with a magnetic field generated by the electro-magnetic actuators such that a magnetic drive force is applied to the sample container carriers (140).

6. Laboratory automation system (100) according to one of the preceding claims, **characterized in that**
- the laboratory automation system (100) comprises a pipetting station (20), wherein the pipetting station (20) is adapted to operate in response to the determined geometrical properties of the sample container (145).

7. Laboratory automation system (100) according to one of the preceding claims, **characterized in that**
- the laboratory automation system (100) comprises a number of laboratory stations (30) being adapted to process the samples (146) comprised in the sample containers (145).

## Patentansprüche

1. Laborautomatisierungssystem (100) zum Bearbeiten von Probenbehältern (145), die Laborproben (146) enthalten, und/oder zum Bearbeiten der Proben (146), umfassend:
- eine Digitalkamera (160), die dafür ausgelegt ist, ein Bild von dem Probenbehälter (145) zusammen mit einem Kalibrierungselement (170, 170', 170", 170"') aufzunehmen, wobei das Bild Bilddaten bezüglich des Probenbehälters (145) und Bilddaten bezüglich des Kalibrierungselements (170, 170', 170", 170"') umfasst, und
- eine Bildbearbeitungsvorrichtung (155), die dafür ausgelegt ist, geometrische Eigenschaften des Probenbehälters (145) in Abhängigkeit der Bilddaten bezüglich des Probenbehälters (145) und der Bilddaten bezüglich des Kalibrierungselements (170, 170′, 170ʺ, 170‴) zu bestimmen,
- wobei der Probenbehälter (145) mit Hilfe einer Kappe (147) verschlossen ist,
**dadurch gekennzeichnet, dass**
- das Kalibrierungselement (170") von der Kappe (147) gebildet wird,
- wobei die Bildbearbeitungsvorrichtung (155) dafür ausgelegt ist,
- geometrische Eigenschaften der Kappe (147) zu bestimmen,
- Pixeldaten bezüglich des Probenbehälters (145) und Pixeldaten bezüglich der Kappe (147) durch Mustererkennung zu bestimmen,
- die Pixel entlang einer Koordinate für den Probenbehälter (145) und für die Kappe (147) zu zählen und
- die geometrischen Eigenschaften des Probenbehälters (145) in dieser Koordinate basierend auf dem Dreisatz unter Verwendung der gezählten Pixel in dieser Koordinate zu bestimmen.

2. Laborautomatisierungssystem (100) nach Anspruch 1, **dadurch gekennzeichnet, dass**
- das Laborautomatisierungssystem (100) Probenbehälterträger (140) umfasst, die dafür ausgelegt sind, die Probenbehälter (145) zu tragen.

3. Laborautomatisierungssystem (100) nach einem der vorstehenden Ansprüche, **dadurch gekennzeichnet, dass**
- die Digitalkamera (160) eine digitale Farbkamera ist,
- wobei das Kalibrierungselement (170, 170', 170", 170"') definierte Farbeigenschaften hat, wobei die Bildbearbeitungsvorrichtung (155) dafür ausgelegt ist, die digitale Farbkamera in Abhängigkeit der definierten Farbeigenschaften des Kalibrierungselements (170, 170', 170", 170"') zu kalibrieren.

4. Laborautomatisierungssystem (100) nach Anspruch 2 oder 3, **dadurch gekennzeichnet, dass**
- das Laborautomatisierungssystem (100) Folgendes umfasst:
- eine Transportebene (110),
- Antriebsmittel (120), die dafür ausgelegt sind, die Probenbehälterträger (140) auf der Transportebene (110) zu bewegen, und
- eine Steuervorrichtung (150), die dafür ausgelegt ist, die Bewegung der Probenbehälterträger (140) auf der Transportebene (110) durch Antreiben der Antriebsmittel (120) so zu bewegen, dass sich die Probenbehälterträger (140) entlang entsprechender Transportwege bewegen.

5. Laborautomatisierungssystem (100) nach Anspruch 4, **dadurch gekennzeichnet, dass**
- die Antriebsmittel (120) elektromagnetische Aktuatoren sind, die sich unter der Transportebene (110) befinden und mit der Steuervorrichtung (150) gesteuert werden können, und
- die Probenbehälterträger (140) jeweils eine magnetisch wirkende Vorrichtung (141) zur Interaktion mit einem Magnetfeld, das von den elektromagnetischen Aktuatoren erzeugt wurde, umfassen, so dass eine magnetische Antriebskraft auf die Probenbehälterträger (140) ausgeübt wird.

6. Laborautomatisierungssystem (100) nach einem der vorstehenden Ansprüche, **dadurch gekennzeichnet, dass**
- das Laborautomatisierungssystem (100) eine Pipettierstation (20) umfasst, wobei die Pipettierstation (20) dafür ausgelegt ist, in Reaktion auf die bestimmten geometrischen Eigenschaften des Probenbehälters (145) zu arbeiten.

7. Laborautomatisierungssystem (100) nach einem der vorstehenden Ansprüche, **dadurch gekennzeichnet, dass**
- das Laborautomatisierungssystem (100) mehrere Laborstationen (30) umfasst, die dafür ausgelegt sind, die in den Probenbehältern (145) enthaltenen Proben (146) zu bearbeiten.

## Revendications

1. Système d'automatisation de laboratoire (100) pour le traitement de récipients d'échantillon (145) contenant des échantillons de laboratoire (146) et/ou pour le traitement des échantillons (146), comprenant :
- un appareil photo numérique (160) adapté pour prendre une image du récipient d'échantillon (145) conjointement avec un élément de calibration (170, 170', 170", 170"'), dans lequel l'image comprend des données d'image liées au récipient d'échantillon (145) et des données d'image liées à l'élément de calibration (170, 170', 170", 170"'), et
- un dispositif de traitement d'image (155) adapté pour déterminer les propriétés géométriques du récipient d'échantillon (145) en fonction des données d'image liées au récipient d'échantillon (145) et des données d'image liées à l'élément de calibration (170, 170', 170", 170'"),
- dans lequel le récipient d'échantillon (145) est fermé au moyen d'un capuchon (147), **caractérisé en ce que**
- l'élément de calibration (170") est formé par le capuchon (147),
- dans lequel le dispositif de traitement d'image (155) est adapté pour
- déterminer les propriétés géométriques du capuchon (147),
- déterminer les données de pixels liées au récipient d'échantillon (145) et les données de pixel liées au capuchon (147) par reconnaissance de motif,
- compter les pixels le long d'une coordonnée pour le récipient d'échantillon (145) et pour le capuchon (147), et
- déterminer les propriétés géométriques du récipient d'échantillon (145) dans cette coordonnée sur la base d'une règle de trois, en utilisant les pixels comptés dans cette coordonnée.

2. Système d'automatisation de laboratoire (100) selon la revendication 1, **caractérisé en ce que**
- le système d'automatisation de laboratoire (100) comprend des porte-récipients d'échantillon (140) adaptés pour porter les récipients d'échantillon (145).

3. Système d'automatisation de laboratoire (100) selon l'une des revendications précédentes, **caractérisé en ce que**
- l'appareil photo numérique (160) est un appareil photo numérique couleur,
- dans lequel l'élément de calibration (170, 170', 170", 170"') a des propriétés de couleur définies, dans lequel le dispositif de traitement d'image (155) est adapté pour calibrer l'appareil photo numérique couleur en fonction des propriétés de couleur définies de l'élément de calibration (170, 170', 170", 170"').

4. Système d'automatisation de laboratoire (100) selon la revendication 2 ou 3, **caractérisé en ce que**
- le système d'automatisation de laboratoire (100) comprend :
- un plan de transport (110),
- des moyens d'entraînement (120) adaptés pour déplacer les porte-récipients d'échantillon (140) sur le dessus du plan de transport (110), et
- un dispositif de commande (150) adapté pour commander le mouvement des porte-récipients d'échantillon (140) sur le dessus du plan de transport (110) en entraînant les moyens d'entraînement (120) de sorte que les porte-récipients d'échantillon (140) se déplacent le long des trajets de transport correspondants.

5. Système d'automatisation de laboratoire (100) selon la revendication 4, **caractérisé en ce que**
- les moyens d'entraînement (120) sont des actionneurs électromagnétiques situés sous le plan de transport (110) et pouvant être commandés par le dispositif de commande (150), et
- les porte-récipients d'échantillon (140) comprennent respectivement un dispositif magnétiquement actif (141) pour l'interaction avec un champ magnétique généré par les actionneurs électromagnétiques de sorte qu'une force d'entraînement magnétique est appliquée aux porte-récipients d'échantillon (140).

6. Système d'automatisation de laboratoire (100) selon l'une des revendications précédentes, **caractérisé en ce que**
- le système d'automatisation de laboratoire (100) comprend une station de pipetage (20), dans lequel la station de pipetage (20) est adaptée pour fonctionner en réponse aux propriétés géométriques déterminées du récipient d'échantillon (145).

7. Système d'automatisation de laboratoire (100) selon l'une des revendications précédentes, **caractérisé en ce que**
- le système d'automatisation de laboratoire (100) comprend un nombre de stations de laboratoire (30) adaptées pour traiter les échantillons (146) compris dans les récipients d'échantillons (145).
